# EUROPÄISCHE PATENTSCHRIFT

(11) **EP 1 288 756 B1**
(45) Veröffentlichungstag und Bekanntmachung des Hinweises auf die Patenterteilung: **03.01.2007**
(21) Anmeldenummer: 02013514.1
(22) Anmeldetag: 17.06.2002
(51) Int. Cl.: G05B 19/416, B25J 9/16

(54) **Verfahren und System zum Erzeugen von Referenzdaten für eine mehrachsig bewegbare Maschine**
Method and system for generating reference data for a machine with a plurality of motion axis
Méthode et système de génération de données de référence pour une machine ayant une pluralité d'axes en déplacement

(30) Priorität: 25.06.2001 DE 10130498
(43) Veröffentlichungstag der Anmeldung: 05.03.2003
(73) Patentinhaber: Dürr Systems GmbH, 70435 Stuttgart (DE)
(72) Erfinder: Hezel, Thomas, 71679 Asperg (DE); Raila, Gunther, 75417 Mühlacker (DE); Meissner, Alexander Dr., 70193 Stuttgart (DE)
(74) Vertreter: Heusler, Wolfgang

(56) Entgegenhaltungen:
- DE-A1- 3 832 457
- DE-A1- 3 837 526
- US-A- 3 750 244
- US-A- 4 788 440
- US-A- 4 806 066
- US-A- 5 672 924
- US-A- 5 694 038
- US-A- 6 084 373
- ANONYMOUS: "Hall-Effect IC Applications Guide (AN27701) - Allegro MicroSystems" INTERNET ARTICLE, [Online] 1. März 2000 (2000-03-01), XP002327742 Gefunden im Internet: URL:http://web.archive.org/web/20000831005 700/www.allegromicro.com/techpub2/an/an277 01.pdf> [gefunden am 2005-05-10]
- ANONYMOUS: "Adept Cobra 600 and Adept Cobra 800 Robot - Instruction Handbook 00560-00100, Rev. B- Chapter 7 and Appendix D" ADEPT TECHNOLOGY, INC, [Online] 31. März 1999 (1999-03-31), XP002327743 USA Gefunden im Internet: URL:http://www.adept.com/MAIN/KE/DATA/adep t_title_index.htm> [gefunden am 2005-05-04]

## Beschreibung

Die Erfindung betrifft ein Verfahren und ein System zum Erzeugen von Referenzdaten gemäß dem Oberbegriff der unabhängigen Patentansprüche. Insbesondere handelt es sich um die Referenzierung von Roboterachsen.

Nach der Installation von Robotern und sonstigen programmgesteuerten Maschinen müssen vor dem Arbeitsbeginn der Maschine ihre relativ zueinander bewegbaren Teile (die vor allem bei Robotern bekanntlich als "Achsen" bezeichnet werden) in Bezug aufeinander justiert oder "referenziert" werden, damit die Programmsteuerung die Ausgangsstellung der verschiedenen Achsen kennt, auf die alle auszuführenden Bewegungen bezogen werden müssen, und die Maschine entsprechend "initialisieren" kann. Es ist bekannt und üblich, die Relativposition der Maschinenteile durch an ihnen angeordnete Referenzfelemente während einer "Referenzfahrt" zu ermitteln. Gemäß einer typischen bekannten Methode zur Referenzierung oder Initialisierung eines Roboters wird zunächst an der betreffenden Achse ein Justagewerkzeug eingerichtet, das nach Beendigung des Initialisierungsvorgangs wieder abgebaut werden muss. Als Referenzelemente wurden beispielsweise Anordnungen mit Nocken und Schaltern oder auch Nocken und induktive Weggeber verwendet. Andere bei manchen Maschinen übliche Systeme arbeiten mit Neigungswinkelsensoren, Maßbändern, Pfeilen und Kerben, Messuhren mit Nocken und/oder Kerben und Nonien.

Soweit die bekannten Methoden überhaupt insbesondere für Roboter geeignet und nicht zu aufwendig sind, erweisen sie sich als ungenau und/oder störanfällig. Bei mehrachsig bewegbaren Maschinen wie Robotern können sich Fehler, die bei bekannten Messmethoden z. B. mit Neigungswinkelsensoren auftreten können, aufgrund der Verkettung der Roboterachsen in unerwünschtem Maße addieren. Schwierigkeiten ergeben sich auch deshalb, weil Resolver, Endschaltergetriebe und Absolutwertgeber speziell bei rotatorischen Achsen meist indirekt zur Wirkbewegung am Motor angebaut sind oder mindestens eine Getriebestufe konstruktiv zwischengeschaltet ist, wodurch zusätzliche Fehler entstehen und übertragen werden können. Außerdem sind manche an sich bekannten Messmethoden aufgrund ihrer Funktion an nicht überall erfüllbare Bedingungen gebunden.

Die Druckschrift "Adept Cobra 600 and Adept Cobra 800 Robot - Instruction Handbook 00560-00100, Rev. B- Chapter 7 and Appendix D" ADEPT TECHNOLOGY, INC, [Online] 31. März 1999, offenbart ein Verfahren zum Erzeugen von Referenzdaten, mit denen die Relativposition eines bewegbaren Teils einer Programmgesteuerten mehrachsig bewegbaren Maschine in Bezug auf ein anderes Teil bestimmt wird, wobei vor Arbeitsbeginn der Maschine eine Referenzbewegung erfolgt, bei der das eine Teil relativ zu dem anderen Teil bewegt und ein Signal erzeugt wird, wenn ein an dem einen Teil angeordnetes Referenzelement und ein an dem anderen Teil angeordnetes Referenzelement sich einander annähern. Weiterhin ist aus dieser Druckschrift bekannt, dass die Relativposition der beiden Teile, bei deren Erreichen das Annäherungssignal erzeugt wird, berührungslos durch Referenzelemente ermittelt wird, wobei induktive Annäherungssensoren eingesetzt werden.

Weiterer Stand der Technik ist bekannt aus US-A-3 750 244, US-A-4 806 066, US-A-5 672 924, US-A-6 084 373, "Hall-Effect IC Applications Guide (AN27701) - Allegro MicroSystems" Internet Article, [Online] 1. März 2000, DE 199 18 140 A1, DE 42 10 934 C1, DE 691 09 872 T2, DE 32 18 298 A1, DE 38 13 708 A1 und DE 199 47 008 A1.

Die aus dem Stand der Technik bekannten Verfahren beziehungsweise Systeme sind jedoch unbefriedigend.

Der Erfindung liegt die Aufgabe zugrunde, ein Verfahren bzw. ein System anzugeben, mit denen die gewünschten Referenzdaten einfacher und mit wenig aufwendigen, möglichst universell verwendbaren Bauelementen und dennoch mit größerer Genauigkeit erzeugt werden können als bisher.

Diese Aufgabe wird durch die Merkmale der Patentansprüche gelöst.

Durch die Erfindung wird ein kostengünstiges, berührungsloses, robustes und zuverlässiges Referenzierungssystem für Maschinenachsen geschaffen, das insbesondere bei Ausnutzung des Hall-Effekts die Relativposition der Maschinenteile mit größtmöglicher Genauigkeit ermitteln kann. Da die zu verwendenden Referenzelemente permanent an den Maschinenteilen angebracht werden können, entfällt der nachteilige Werkzeugeinricht- und Werkzeugabbauvorgang der oben erwähnten bekannten Methode. Ferner kann problemlos Redundanz ermöglicht werden durch Anbringen von zwei Messsystemen, die für Ausfall eines Systems beispielsweise durch Kollision oder Alterung gegenseitig abgeglichen werden können. Darüber hinaus ermöglicht ein ähnliches zweites Messsystem, das ebenso problemlos eingebaut werden kann, durch eine Ausgleichsmessung auch eine Korrektur des erzeugten Schaltsignals beispielsweise zur Kompensation von Abstandsänderungen der Maschinenteile oder beliebiger anderer Einflüsse durch entsprechende Rechenvorgänge.

Die erfindungsgemäß bevorzugten Hall-Sensoren haben noch weitere Vorteile wie Driftfreiheit, geringere Fehlereinflüsse durch relativ großen Schaltabstand sowie Unempfindlichkeit gegen Verschmutzung, was beispielsweise im Fall von Lackierrobotern wichtig ist.

Die Ansteuerung des als Referenzelement verwendeten HallSensors erfolgt vorzugsweise durch einen Permanentmagneten, der als Referenzelement an dem anderen Teil der Maschine angebracht ist. Vorzugsweise sind der Hall-Sensor und das Magnetelement hierbei so angeordnet, dass die beiden Teile sich berührungslos einander gegenüberliegen, wobei zwischen dem Hall-Sensor und dem Magnetelement ein Spalt mit einer vorgegebenen Spaltbreite besteht. Das Magnetelement ist hierbei vorzugsweise so angeordnet, dass die magnetischen Feldlinien in der Mitte des Spaltes zwischen dem Hall-Sensor und dem Magnetelement im Wesentlichen rechtwinklig zur Spaltebene verlaufen, so dass die Hall-Spannung in der Mitte gleich Null ist. Das Magnetelement besteht deshalb vorzugsweise aus einem Permanentmagneten, dessen Nord-Süd-Richtung parallel zur Spaltebene verläuft.

Im Rahmen der Erfindung sind an dem einen Teil der Maschine zwei Referenzelemente angebracht, wobei das eine Referenzelement zur Freigabe der Positionsbestimmung dient, während das andere Referenzelement für die eigentliche Positionsbestimmung vorgesehen ist. Die beiden Referenzelemente sind deshalb vorzugsweise in Bewegungsrichtung hintereinander angeordnet, so dass die Ausgangssignale der beiden Referenzelemente zueinander phasenverschoben sind. Vorzugsweise ist das in Bewegungsrichtung vordere Referenzelement mit einer Komparatorschaltung verbunden, die bei einer Annäherung die eigentliche Messung durch das andere Referenzelement freigibt. Hierbei kann beispielsweise der Null-Durchgang des von dem Referenzelement erzeugten Ausgangssignals ausgewertet werden.

Anhand der Zeichnung wird die Erfindung näher erläutert. Es zeigen:
- Fig. 1: die schematische Darstellung der Anordnung der Referenzelemte an zwei Maschinenteilen eines Roboters;
- Fig. 2: den prinzipiellen Verlauf der Hall-Spannung bei Annäherung eines Magnetelements;
- Fig. 3: das Prinzip der Referenzierung des Roboters mit entsprechendem Ablaufschema und
- Fig. 4: eine schematische Darstellung eines weiteren Ausführungsbeispiels.

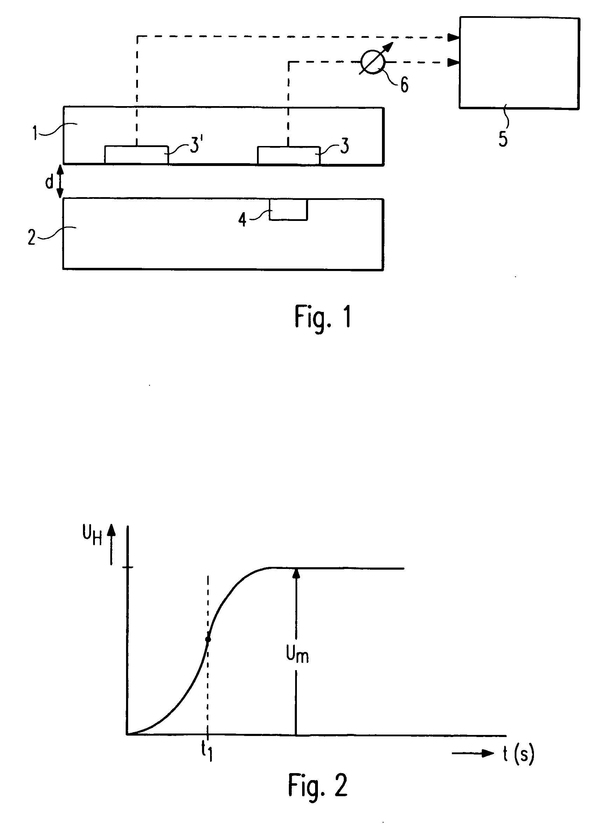

Bei den in Fig. 1 schematisch dargestellten Maschinenteilen kann es sich um zwei in einem gegebenen gegenseitigen Abstand d gelagerte Flansche eines Roboters handeln, von denen der eine Flansch 1 relativ zu dem anderen Flansch 2 beispielsweise drehbar ist. An dem rotierenden Flansch 1 ist ein integrierter Schaltkreis (IC) 3 permanent befestigt, der einen Hall-Generator an sich handelsüblicher Art und eine zugehörige elektronische Messanordnung aufweist. Der Hall-IC oder Schaltkreis 3 kann auch einen Mikroprozessor enthalten. In oder an dem als wenigstens relativ zu dem Flansch 1 feststehend angenommenen Flansch 2 ist dagegen ebenfalls dauerhaft ein passiver Markengeber 4 befestigt, der durch einen Permanentmagneten gebildet ist.

Die durch den Schaltkreis 3 und den magnetischen Markengeber 4 gebildeten Referenzelemente sind so angeordnet, dass der Magnet eine auswertbare Änderung der Hall-Spannung am Schaltkreis 3 auslöst, wenn sich die Referenzelemente bei Drehung des Flansches 1 einander annähern. Das von dem Schaltkreis 3 erzeugte Signal kann analog oder digital sein und wird einer externen Auswerteschaltung 5 zugeführt, ggf. über eine Messeinrichtung 6.

Die hier beschriebene Referenzierungsanordnung kann an allen Achsen des Roboters und auch an linear relativ zueinander verschiebbaren Maschinenteilen vorgesehen sein.

An einer in der Relativbewegungsrichtung versetzten Stelle des Flansches 1 (oder sonstigen Maschinenteils) kann als zweites aktives Referenzelement ein ähnlicher weiterer Schaltkreis 3' befestigt sein, und zwar so, dass der passive Markengeber 4 bei der Referenzbewegung zunächst ein Signal des einen Schaltkreises 3 oder 3' auslöst und danach ein Signal des anderen Schaltkreises. Es können auch mehrere Markengeber sinnvoll sein.

Gemäß Fig. 2 kann die bei Annäherung des magnetischen Markengebers 4 an den Hall-Generator erzeugte Hall-Spannung U_{H} zeitabhängig typisch mit der dargestellten Flankenform auf einen Maximalwert Uₘ ansteigen. Je nach Art des Magnetgebers und Sensorsystems kann der Anstieg mehr oder weniger steil sein.

Die analoge Änderung der Hall-Spannung U_{H} kann zur Ermittlung der Relativposition der Maschinenteile zweckmäßig dadurch ausgewertet werden, dass durch einfache Rechenvorgänge der Punkt maximaler Steigung (dU/dt) und dessen Zeitpunkts t₁ oder der Schaltabstand des Zeitpunkts t₁ von einem Bezugszeitpunkt festgestellt werden.

Bei dem Vorbeilauf des magnetischen Markengebers 4 an dem Schaltkreis 3 können sowohl der Anstieg der Hall-Spannung als auch deren Abstieg ausgewertet werden. Eine weitere Möglichkeit besteht insbesondere bei steilen Flanken darin, den An- oder Abstieg der Hall-Spannung als digitales Schaltsignal auszuwerten.

Ferner kann es zur Erhöhung der Genauigkeit des entsprechend dem Schaltzeitpunkt erzeugten Schaltsignals zweckmäßig sein, den Messvorgang mehrmals zu wiederholen und die jeweiligen Ergebnisse zu mitteln oder statisch auszuwerten.

Mit dem Hall-Sensor des erwähnten zweiten Schaltkreises 3' kann man u.a. zusätzliche Rechnungen zur Kompensation beispielsweise von Änderungen des Abstands d (Fig. 1) zwischen den Flanschen 1 und 2 und des entsprechenden gegenseitigen Abstandes der Referenzelemente durchführen. Zu diesem Zweck kann mit dem Schaltkreis 3' der dem Abstand d entsprechende Maximalwert Uₘ der Hall-Spannung U_{H} gemessen und bei Abstandsänderungen zur Korrektur des errechneten Schaltzeitpunkts verwendet werden.

Wie schon erwähnt wurde, kann ein zweites Messsystem mit einem zusätzlichen Schaltkreis 3' auch aus Redundanzgründen sinnvoll sein. In diesem Fall kann man beide Messergebnisse speichern und bei Ausfall eines Systems das Ergebnis des verbleibenden Systems verwerten.

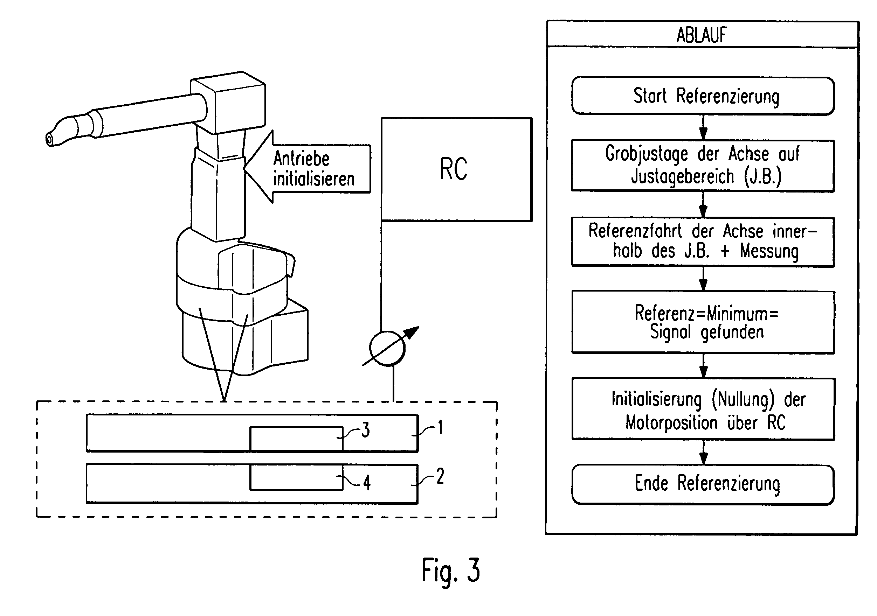

Fig. 3 verdeutlicht das Verfahrensprinzip der hier beschriebenen Referenzierung.

Nach dem Start erfolgt zunächst eine Grobjustierung der betrachteten Roboterachse durch Drehen des Flansches 1 in den Justierbereich, in dem der Markengeber 4 am anderen Flansch 2 den den Schaltkreis 3 bildenden Hall-IC passieren soll.

Bei der anschließenden Referenzfahrt der Roboterachse innerhalb des Justierbereiches (J.B.) erfolgt die oben erläuterte Messung und Auswertung der Hall-Spannung.

Das Erreichen des Minimalabstandes zwischen dem passiven Markengeber 4 und dem Hall-Sensor wird zur Erzeugung des Referenzsignals ausgewertet.

Mit dem Referenzsignal erfolgt schließlich die erforderliche Initialisierung ("Nullung") der Antriebsmotoren des Roboters in an sich üblicher Weise über dessen Steuersystem (RC). Das bisher erforderlich Einrichten und Abrüsten des Justagewerkzeugs entfällt.

Das hier beschriebene Verfahren bzw. System eignet sich nicht nur für die Bestimmung der gegenseitigen Stellung von zwei relativ zueinander bewegbaren Teilen einer Maschine, sondern beispielsweise auch zur Bestimmung des Ortes der Maschine in Bezug auf zu bearbeitende Werkstücke, etwa eines Lackierroboters in Bezug auf zu lackierende Fahrzeugkarossen.

Zur berührungslosen Relativpositionsbestimmung besteht auch die Möglichkeit der Verwendung von Licht, Ultraschall und Wirbelstromsensoren.

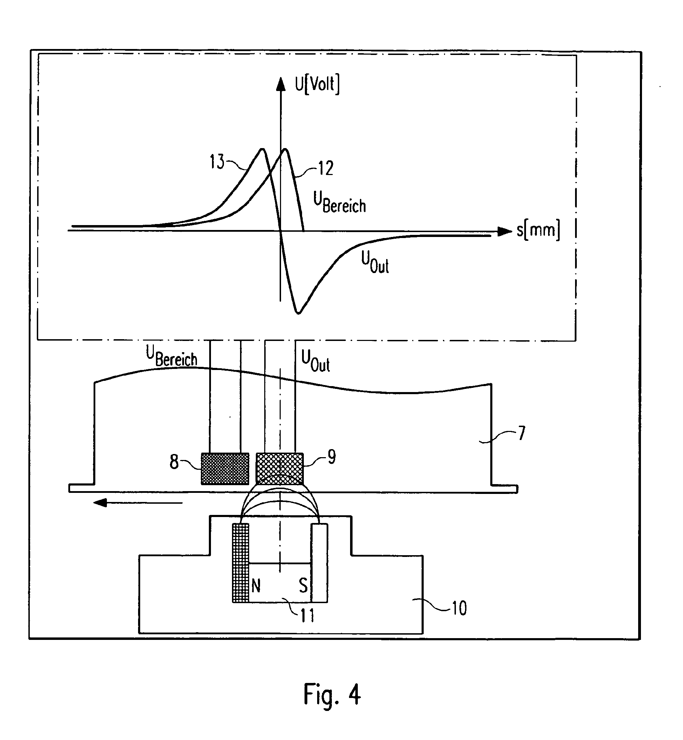

Im folgenden wird nun das in Figur 4 dargestellte Ausführungsbeispiel beschrieben, bei dem an einem Flansch 7 der Maschine zwei Hall-Generatoren 8, 9 angebracht sind, während an einem gegenüberliegenden Flansch 10 ein Permanentmagnet 11 angeordnet ist.

Der Hall-Generator 8 ist hierbei in Bewegungsrichtung vor dem Hall-Generator 9 angebracht und passiert den Permanentmagneten 11 bei einer Relativbewegung der beiden Flansche 7, 10 deshalb vor dem Hall-Generator 9. Entsprechend erzeugen die beiden Hall-Generatoren 8, 9 Ausgangssignale 12, 13, die zueinander phasenverschoben sind, wobei das Ausgangssignal 12 des Hall-Generators 8 dem Ausgangssignals 13 des Hall-Generators 9 vorauseilt.

Der zusätzliche Hall-Generator 8 hat hierbei die Aufgabe, die eigentliche Messung freizugeben, wenn sich die beiden Flansche 7, 10 aneinander angenähert haben. Der Hall-Generator 8 ist deshalb mit einem Komparator (nicht dargestellt) verbunden, der das Ausgangssignal 12 des Hall-Generators 8 mit einem vorgegebenen Schwellenwert vergleicht. Falls das Ausgangssignal 12 des Komparators den vorgegebenen Schwellenwert überschreitet, so wird die eigentliche Messung durch den Hall-Generator 9 freigegeben.

Der Hall-Generator 9 ist ebenfalls mit einem Komparator (nicht dargestellt) verbunden, der das Ausgangssignal 13 des Hall-Generators 9 auswertet und bei einem Null-Durchgang des Ausgangssignals 13 das Referenzsignal erzeugt.

Der Permanentmagnet 11 ist hierbei mit seiner magnetischen Achse parallel zu dem Spalt zwischen den beiden Flanschen 7, 10 angeordnet, so dass die magnetischen Feldlinien in der Mitte des Permanentmagneten 11 parallel zu dem Spalt verlaufen. Die von dem Hall-Generator 9 erzeugte Hall-Spannung ist deshalb Null, wenn sich die beiden Flanschen 7, 10 in der in Figur 4 gezeigten Relativposition befinden.

## Patentansprüche

1. Verfahren zum Erzeugen von Referenzdaten, mit denen die Relativposition eines bewegbaren Teils (1) eines programmgesteuerten mehrachsig bewegbaren Roboters in Bezug auf ein anderes Teil (2) bestimmt wird, wobei
a) vor Arbeitsbeginn der Maschine eine Referenzbewegung erfolgt, bei der das eine Teil (1) relativ zu dem anderen Teil (2) bewegt und ein Signal (U_{H}) erzeugt wird, wenn ein an dem einen Teil (1) angeordnetes Referenzelement (3) und ein an dem anderen Teil (2) angeordnetes Referenzelement (4) sich einander annähern, und wobei
b) die Relativposition der beiden Teile (1, 2), bei deren Erreichen das Annäherungssignal erzeugt wird, berührungslos durch Referenzelemente (3, 4) ermittelt wird,
**dadurch gekennzeichnet,**
c) **dass** ein Strom- oder Spannungswert (U_{H}) gemessen wird, der bei der gegenseitigen Annäherung der Referenzelemente (3, 4) während der Referenzbewegung von dem einen Referenzelement (3) aufgrund des Hall-Effekts erzeugt wird, und
d) **dass** aus der Änderung dieses während der Referenzbewegung gemessenen Hall-Effekt-Wertes (U_{H}) die Referenzposition errechnet wird, und
e) **dass** an einem der beiden Teile (7, 10) zwei Referenzelemente (8, 9) angebracht sind, die jeweils ein Ausgangssignal (12, 13) erzeugen, wobei die beiden Ausgangssignale (12, 13) ausgewertet werden.

2. Verfahren nach Anspruch 1, **dadurch gekennzeichnet, dass** die Referenzelemente (3, 4) während der Bewegung nur durch die beiden Teile (1, 2) mechanisch gekoppelt sind.

3. Verfahren nach einem der vorhergehenden Ansprüche, **dadurch gekennzeichnet, dass** die Steigung der sich bei der Messung ändernden Hall-Spannung (U_{H}) ermittelt und aus dem Zeitpunkt (t₁) maximaler Steigung die Relativposition errechnet wird.

4. Verfahren nach einem der Ansprüche 1 bis 2, **dadurch gekennzeichnet, dass** mit der Flanke der bei der Messung erzeugten Hall-Spannung (U_{H}) ein Schaltsignal erzeugt und aus dem Zeitpunkt dieses Schaltsignals die Relativposition errechnet wird.

5. Verfahren nach einem der vorangehenden Ansprüche, **dadurch gekennzeichnet, dass** mehrere Referenzbewegungen durchgeführt werden und die sich jeweils ergebenden Messwerte zur Erhöhung der Messgenauigkeit gemittelt oder statistisch ausgewertet werden.

6. Verfahren nach einem der vorangehenden Ansprüche, **dadurch gekennzeichnet, dass** der Maximalwert (Uₘ) des aufgrund des Hall-Effekts erzeugten Strom- oder Spannungswerts (U_{H}) gemessen und hiermit zur Kompensation von Änderungen des gegenseitigen Abstands (d) der beiden Maschinenteile (1, 2) oder anderer Parameter die errechnete Relativposition korrigiert wird.

7. Verfahren nach einem der vorangehenden Ansprüche, **dadurch gekennzeichnet, dass** die errechnete Relativposition zur Justierung des gespeicherten Bewegungssteuerprogramms der Maschine verwendet wird.

8. Verfahren nach einem der vorangehenden Ansprüche, **dadurch gekennzeichnet, dass** vor der Referenzbewegung die beiden Teile (1, 2) in eine Stellung bewegt werden, in der die Referenzelemente (3, 4) sich in einem vorbestimmten Justierbereich befinden.

9. System zum Erzeugen von Referenzdaten, mit denen die Relativposition eines bewegbaren Teils (1) eines programmgesteuerten mehrachsig bewegbaren Roboters in Bezug auf ein anderes Teil (2) bestimmbar ist,
a) mit an den beiden Teilen (1, 2) angeordneten Referenzelementen (3, 4), die einander bei einer bestimmten Relativposition der Teile (1, 2) mit einem Abstand gegenüberliegen,
b) wobei das an dem einen Teil (1) angeordnete erste Referenzelement (3) auf das an dem anderen Teil (2) angeordnete Referenzelement (4) ansprechend ein Signal (U_{H}) erzeugt,
**dadurch gekennzeichnet,**
c) **dass** an dem ersten Teil (1) mindestens ein Hall-Generator (3) und an dem zweiten Teil (2) mindestens ein Magnetelement (4) zur Änderung der bei gegenseitiger Annäherung der Referenzelemente von dem Hall-Generator (3) erzeugten Ausgangsspannung (U_{H}) angeordnet sind, und
d) **dass** an den Hall-Generator (3) eine Messanordnung angeschlossen ist, mit der aus der Spannungsänderung die Relativposition der Teile (1, 2) bestimmbar ist, und
e) **dass** an dem einen Teil (1) zwei Referenzelemente (3, 3') derart angeordnet sind, dass mit ihnen aufeinanderfolgend je ein Signal erzeugbar ist.

10. System nach Anspruch 9, **dadurch gekennzeichnet, dass** die beiden Referenzelemente (3, 4) einander berührungslos gegenüberliegen, wenn sich die beiden Teile (1, 2) in der Relativposition befinden, und nur durch die Lagerung dieser Teile (1, 2) mechanisch miteinander gekoppelt sind.

11. System nach Anspruch 9 oder 10, **dadurch gekennzeichnet, dass** das erste Referenzelement mit einer elektronischen Messschaltung zu einer permanent an dem einen Teil (1) befestigten Messanordnung (3) vereinigt ist, und dass das andere Referenzelement (4) ebenfalls permanent an dem anderen Teil (2) befestigt ist.

12. System nach einem der Ansprüche 9 bis 11, **dadurch gekennzeichnet, dass** die Messanordnung mit dem Hall-Generator integriert an dem einen Teil (1) angeordnet ist.

13. System nach mindestens einem der Ansprüche 9 bis 12, **dadurch gekennzeichnet, dass** an dem ersten Teil (7) ein erster Hall-Generator (9) und ein zweiter Hallgenerator (8) angeordnet ist.

14. System nach Anspruch 13, **dadurch gekennzeichnet, dass** der erste Hall-Generator (9) und der zweite Hall-Generator (8) bezüglich der Bewegungsrichtung hintereinander angeordnet sind.

15. System nach Anspruch 13 und/oder Anspruch 14, **dadurch gekennzeichnet, dass** der zweite Hall-Generator (8) mit einer Komparatorschaltung verbunden ist, die in Abhängigkeit von dem Signal des zweiten Hall-Generators (8) die Messanordnung aktiviert.

## Claims

1. Method of generating reference data with which the relative position of a movable part (1) of a program-controlled multiaxially movable robot with respect to another part (2) is determined, wherein
a) before the start of operation of the machine a reference movement takes place in which one part (1) is moved relative to the other part (2) and a signal (U_{H}) is generated when a reference element (3) disposed on one part (1) and a reference element (4) disposed on the other part (2) approach one another, and wherein
b) the relative position of the two parts (1, 2) at which, when it is reached, the approach signal is generated is determined without contact by reference elements (3, 4),
**characterised in that**
c) a current or voltage value (U_{H}) is measured which is generated by one reference element (3) due to the Hall effect as the reference elements (3, 4) approach one another during the reference movement, and
d) the reference position is computed from the change in this Hall effect value (U_{H}) measured during the reference movement, and
e) two reference elements (8, 9) which each generate an output signal (12, 13) are mounted on one of the two parts (7, 10), the two output signals (12, 13) being evaluated.

2. Method as claimed in Claim 1, **characterised in that** during the movement the reference elements (3, 4) are mechanically coupled only by the two parts (1, 2).

3. Method as claimed in any one of the preceding claims, **characterised in that** the increase in the Hall voltage (U_{H}) which changes during the measurement is determined and the relative position is computed from the time (t₁) of maximum increase.

4. Method as claimed in any one of Claims 1 to 2, **characterised in that** a switching signal is generated with the flank of the Hall voltage (U_{H}) generated during the measurement and the relative position is computed from the time of this switching signal.

5. Method as claimed in any one of the preceding claims, **characterised in that** a plurality of reference movements are carried out and the measurement values which result in each case are averaged or statistically evaluated in order to increase the accuracy of measurement.

6. Method as claimed in any one of the preceding claims, **characterised in that** the maximum value (Uₘ) of the current or voltage values (U_{H}) generated due to the Hall effect is measured and with it the computed relative position is corrected in order to compensate for changes in the reciprocal spacing (d) of the two machine parts (1, 2) or other parameters.

7. Method as claimed in any one of the preceding claims, **characterised in that** the computed relative position is used for adjustment of the stored movement control program of the machine.

8. Method as claimed in any one of the preceding claims, **characterised in that** before the reference movement the two parts (1, 2) are moved into a position in which the reference elements (3, 4) are located in a predetermined adjustment region.

9. System for generating reference data with which the relative position of a movable part (1) of a program-controlled multiaxially movable robot with respect to another part (2) can be determined,
a) with reference elements (3, 4) which are disposed on the two parts (1, 2) and lie opposite one another with a spacing at a determined relative position of the parts (1, 2),
b) wherein the first reference element (3) disposed on one part (1) generates a signal (U_{H}) in response to the reference element (4) disposed on the other part (2),
**characterised in that**
c) at least one Hall generator is disposed on the first part (1) and at least one magnetic element (4) is disposed on the second part (2) in order to change the output voltage (U_{H}) generated by the Hall generator as the reference elements approach one another, and
d) a measuring arrangement by which the relative position of he parts (1, 2) can be determined from the change in voltage is connected to the Hall generator (3), and
e) two reference elements (3, 3') are disposed on one part (1) in such a way that a signal can be generated successively by each of them.

10. System as claimed in Claim 9, **characterised in that** the two reference elements (3, 4) lie opposite one another without contact when the two parts (1, 2) are located in the relative position and are mechanically coupled to one another only by the mounting of these parts (1, 2).

11. System as claimed in Claim 9 or 10, **characterised in that** the first reference element is combined with an electronic measurement circuit to form a measuring arrangement (3) which is fixed on one part (1), and that the other reference element (4) is likewise permanently fixed on the other part (2).

12. System as claimed in any one of Claims 9 to 11, **characterised in that** the measuring arrangement with the Hall generator is integrally disposed on one part (1).

13. System as claimed in at least one of Claims 9 to 12, **characterised in that** a first Hall generator (9) and a second Hall generator (8) are disposed on the first part (7).

14. System as claimed in Claim 13, **characterised in that** the first Hall generator (9) and the second Hall generator (8) are disposed one behind the other with respect to the direction of movement.

15. System as claimed in Claim 13 and/or Claim 14, **characterised in that** the second Hall generator (8) is connected to a comparator circuit which activates the measuring arrangement as a function of the signal from the second Hall generator (8).

## Revendications

1. Procédé pour générer des données de référence, avec lesquelles la position relative d'une partie (1) mobile d'un robot pouvant être déplacée sur plusieurs axes et commandée par programme par rapport à une autre partie (2) est déterminée,
a) un mouvement de référence s'effectuant avant le début du travail de la machine, lors duquel une partie (1) est déplacée par rapport à l'autre partie (2) et un signal (U_{H}) est généré lorsqu'un élément de référence (3) disposé sur une partie (2) et un élément de référence (4) disposé sur l'autre partie (2) se rapprochent, et
b) la position relative des deux parties (1, 2), lors de l'atteinte de laquelle le signal de rapprochement est généré, étant déterminée sans contact par des éléments de référence (3, 4),
**caractérisé en ce que**
c) une valeur de courant ou de tension (U_{H}) est mesurée, laquelle est générée lors du rapprochement réciproque des éléments de référence (3, 4) pendant le déplacement de référence de l'un des éléments de référence (3) en raison de l'effet de Hall, et
d) **en ce que** la position de référence est calculée à partir de la variation de cette valeur d'effet de Hall (U_{H}) mesurée pendant le déplacement de référence, et
e) **en ce que** sur l'une des deux parties (7, 10) sont placés deux éléments de référence (8, 9) qui génèrent chacun un signal de sortie (12, 13), les signaux de sortie (12, 13) étant analysés.

2. Procédé selon la revendication 1, **caractérisé en ce que**, les éléments de références (3, 4) sont couplés mécaniquement pendant le déplacement seulement par les deux parties (1, 2).

3. Procédé selon l'une quelconque des revendications précédentes, **caractérisé en ce que** la pente de la tension de Hall (U_{H}) se rapprochant lors de la mesure est déterminée et la position relative est calculée à partir du moment (t₁) de pente maximale.

4. Procédé selon l'une quelconque des revendications 1 à 2, **caractérisé en ce qu'**un signal de commutation est généré avec le flan de la tension de Hall (U_{H}) mesurée lors de la mesure et la position relative est calculée à partir du moment de ce signal de commutation.

5. Procédé selon l'une quelconque des revendications précédentes, **caractérisé en ce que** plusieurs déplacements de référence sont effectués et les valeurs de mesure qui en résultent sont calculées en moyennes ou analysées de façon statistique pour l'amélioration de la précision de mesure.

6. Procédé selon l'une quelconque des revendications précédentes, **caractérisé en ce que** la valeur maximale (Uₘ) de la valeur de courant ou de tension (U_{H}) générée sur la base de l'effet de Hall est mesurée et la position relative calculée est corrigée de ce fait pour la compensation de variations de la distance réciproque (d) des deux parties (1,2) de machine ou d'autres paramètres.

7. Procédé selon l'une quelconque des revendications précédentes, **caractérisé en ce que** la position relative calculée est utilisée pour l'ajustage du programme de commande de déplacement mémorisé de la machine.

8. Procédé selon l'une quelconque des revendications précédentes, **caractérisé en ce que**, avant le déplacement de référence, les deux parties (1, 2) sont déplacées dans une position dans laquelle les éléments de référence (3, 4) se trouvent dans une plage d'ajustage prédéfinie.

9. Système pour générer des données de référence, avec lesquelles la position relative d'une partie (1) déplaçable d'un robot pouvant être déplacé sur plusieurs axes et commandé par programme peut être déterminée par rapport à une autre partie (2),
a) avec des éléments de référence (3, 4) disposés sur les deux parties (1, 2), qui se font face à une distance lors d'une position relative définie des parties (1, 2),
b) le premier élément de référence (3) disposé sur une partie (1) générant en conséquence un signal (U_{H}) sur l'élément de référence (4) disposé sur l'autre partie (2),
**caractérisé en ce que**,
c) sur la première partie (1) est réalisé au moins un générateur de Hall (3) et sur la seconde partie (2) au moins un élément magnétique (4) pour la modification de la tension de sortie (U_{H}) générée par le générateur de Hall (3) en cas de rapprochement réciproque des éléments de référence, et
d) **en ce qu'**au générateur de Hall (3) est raccordé un dispositif de mesure avec lequel la position relative des parties (1, 2) peut être déterminée à partir de la variation de tension et
e) **en ce que** sur l'une des parties (1) sont disposés deux éléments de référence (3, 3') de telle sorte qu'un signal peut être généré de façon successive avec chacun d'entre eux.

10. Système selon la revendication 9, **caractérisé en ce que** les deux éléments de référence (3, 4) se sont face sans contact lorsque les deux parties (1, 2) se trouvent dans la position relative, et sont couplés entre eux de façon mécanique, seulement par le logement de ces parties (1, 2).

11. Système selon la revendication 9 ou 10, **caractérisé en ce que** le premier élément de référence est réuni avec un circuit de mesure électronique pour former un dispositif de mesure (3) fixé de façon permanente sur l'une des parties (1) et **en ce que** l'autre élément de référence (4) est fixé également de façon permanente sur l'autre partie (2).

12. Système selon l'une quelconque des revendications 9 à 11, **caractérisé en ce que** le dispositif de mesure est disposé avec le générateur de Hall de façon intégrée sur l'une des parties (1).

13. Système selon au moins l'une quelconque des revendications 9 à 12, **caractérisé en ce que** sur la première partie (7) sont disposés un générateur de Hall (9) et un second générateur de Hall (8).

14. Système selon la revendication 13, **caractérisé en ce que** le premier générateur de Hall (9) et le second générateur de Hall (8) sont disposés l'un derrière l'autre par rapport au sens de déplacement.

15. Système selon la revendication 13 et/ou la revendication 14, **caractérisé en ce que** le second générateur de Hall (8) est relié à un circuit comparateur qui active le dispositif de mesure en fonction du signal du second générateur de Hall (8).
